Europäisches Patentamt

European Patent Office

Office européen des brevets

(11) Veröffentlichungsnummer: **0 440 068 A1**

## (12) EUROPÄISCHE PATENTANMELDUNG

(21) Anmeldenummer: 91100742.5

(22) Anmeldetag: 22.01.91

(51) Int. Cl.5: **B60B 33/00**, F16C 35/06, F16C 19/18

(30) Priorität: 30.01.90 DE 9001004 U

(43) Veröffentlichungstag der Anmeldung:
07.08.91 Patentblatt 91/32

(84) Benannte Vertragsstaaten:
**DE FR NL SE**

(71) Anmelder: **Haco-Rollen-Vertrieb GmbH & Co. KG
Am Krupin 15
W-5632 Wermelskirchen-Tente(DE)**

(72) Erfinder: **Der Erfinder hat auf seine Nennung verzichtet**

(74) Vertreter: **Sturies, Herbert et al
Patentanwälte Dr. Ing. Dipl. Phys. Herbert Sturies Dipl. Ing. Peter Eichler Postfach 20 12 42
W-5600 Wuppertal 2(DE)**

(54) **Lenkrolle.**

(57) Eine Lenkrolle für damit verfahrbar auszurüstende Geräte, wie z.B. Müllcontainer, Krankenbetten od.dgl., ist mit einer das Laufrad (1) tragenden Lenkrollengabel (3) und einem an deren Rücken (3') angebrachten sowie am Gerät zu befestigenden Schwenklager (4) versehen, das aus einem Schwenklagertopf (6) und einer darin über einen oberen und unteren Kugellaufkranz (7,8) schwenkbeweglich gelagerten Schwenklagerplatte (9) besteht, wobei die Kugellaufkränze (7,8) zwischen den Außenumfängen der Schwenklagerplatte (9) einerseits und der im wesentlichen zylindrischen Wandung (6''') des Schwenklagertopfes (6) andererseits liegen und der untere Kugellaufkranz (8) einen mindestens so großen Durchmesser wie der obere Kugellaufkranz (7) besitzt.

Damit die Lenkrolle ohne baulichen Mehraufwand noch stärkeren Belastungen gewachsen ist und in ihrem Schwenklager auch spielfreier bleibt, ist der Schwenklagertopf (6) am Lenkrollengabelrücken (3') angebracht und die oben aus dem Schwenklagertopf (6) herausragende Schwenklagerplatte (9) am Gerät zu befestigen.

Fig. 1

EP 0 440 068 A1

# LENKROLLE

Die Erfindung bezieht sich auf eine Lenkrolle für damit verfahrbar auszurüstende Geräte, wie z.B. Müllcontainer, Krankenbetten od.dgl., die mit einer das Laufrad tragenden Lenkrollengabel und einem an deren Rücken angebrachten sowie am Gerät zu befestigenden Schwenklager versehen ist, das aus einem Schwenklagertopf und einer darin über einen oberen und unteren Kugellaufkranz schwenkbeweglich gelagerten Schwenklagerplatte besteht, wobei die Kugellaufkränze zwischen den Außenumfängen der Schwenklagerplatte einerseits und der im wesentlichen zylindrischen Wandung des Schwenklagertopfes andererseits liegen und der untere Kugellaufkranz einen mindestens so großen Durchmesser wie der obere Kugellaufkranz besitzt.

Lenkrollen obiger Art sind bekannt, z.B. durch die DE-OS 33 41 063. Für diese wie auch alle anderen bekannten Lenkrollen vergleichbarer Art ist charakteristisch, daß ihr Schwenklagertopf geräteseitig befestigt und an der nach unten aus ihm herausragenden Schwenklagerplatte die Lenkrollengabel mit ihrem Rücken angebracht ist. Durch die zwischen den Außenumfängen der Schwenklagerplatte und der zylindrischen Topfwandung befindlichen, also vergleichsweise große Durchmesser aufweisenden Kugellaufkränze sind diese Lenkrollen-Schwenklager auch zur Abtragung größerer Lasten durchaus geeignet. Jedoch hat die Praxis gezeigt, daß nach längerer Benutzungsdauer dieser Lenkrollen zunehmendes Lagerspiel in den Kugellagern auftritt, was hauptsächlich auf die jeweilige Überbeanspruchung der auf der Auslagerseite, also Laufradachsenseite der Lenkrollengabel gelegenen oberen Kugellaufpartien zurückzuführen ist.

Der Erfindung liegt daher die Aufgabe zugrunde, eine Lenkrolle der eingangs erwähnten Gattung dahingehend zu verbessern und zu vervollkommnen, daß sie ohne baulichen Mehraufwand noch stärkeren Belastungen auf die Dauer gewachsen ist und in ihrem Schwenklager auch spielfreier bleibt.

Diese Aufgabe wird bei einer gattungsgemäßen Lenkrolle erfindungsgemäß dadurch gelöst, daß der Schwenklagertopf am Lenkrollengabelrücken angebracht und die oben aus dem Schwenklagertopf herausragende Schwenklagerplatte am Gerät zu befestigen ist. Die Erfindung besteht mit anderen Worten darin, daß im Gegensatz zu der bisherigen Einbauweise praktisch aller bekannten Lenkrollen der Schwenklagertopf nicht mehr mit seinem offenen Ende nach unten weisend geräteseitig, sondern eben in umgekehrter Lage am Lenkrollengabelrücken befestigt wird, dagegen die oben aus dem Schwenklagertopf herausragende Schwenklagerplatte mit dem Gerät fest verbunden wird. Die hierdurch erzielbare größere Belastungsfähigkeit des Lenkrollen-Schwenklagers unter sonst gleichen Bedingungen ist hauptsächlich darauf zurückzuführen, daß die auf der Seite der Laufradachse auftretenden wesentlichen Abstützkräfte vom unteren Topfwandungsrand über die unteren Laufkugeln auf die Schwenklagerplatte abgetragen werden, und nicht wie bei der herkömmlichen Schwenklagerbefestigung von der mit der Lenkrollengabel verbundenen Schwenklagerplatte über die oberen Lagerkugeln auf den am Gerät befestigten Schwenklagertopf. Das ist gleichbedeutend damit, daß sich auf die erfindungsgemäße Weise die wirksame Hebelarmlänge zwischen der kippbeanspruchten Lenkrolle und dem durch sie abgestützten Gerät entsprechend verkürzt. Die dadurch bedingte größere Beanspruchbarkeit des Schwenklagers erfordert aber, daß der untere Kugellaufkranz einen größtmöglichen Durchmesser besitzt, damit die Beanspruchbarkeit des unteren Kugellaufkranzes dennoch vergleichsweise gering gehalten werden kann.

Die Schwenklagerplatte ist vorteilhaft mit einer mit dem Gerät zu verbindenden Befestigungsplatte versehen. Diese kann grundsätzlich lösbar mit der Schwenklagerplatte verbunden sein. Besser ist es jedoch, die Befestigungsplatte auf der Schwenklagerplatte aufzuschweißen.

Die Schwenklagerplatte kann aber auch über mindestens eine Schraubgewindebohrung mit dem Gerät unmittelbar verbunden sein. Dazu kann in der Schwenklagerplatte mittig eine Innengewindebohrung vorhanden sein, in der ein Schraubgewindezapfen einzuschrauben ist, welcher unmittelbar am Gerät angeformt oder in den hohl ausgebildeten Gerätefuß einzustecken und damit zu verbinden ist.

Nach einem weiteren Merkmal der Erfindung kann der Schwenklagertopf mit seinem unteren Wandungsrand über eine Rundschweißnaht mit dem Rücken der Lenkrollengabel fest verbunden sein. Auch das trägt zur Stabilitätsverbesserung des Lenkrollen-Schwenklagers bei. Dabei kann der Schwenklagertopf einen mit seiner im wesentlichen zylindrischen Wandung einstückigen Boden besitzen, der dem Lenkrollengabelrücken zugewandt liegt. Es ist aber auch möglich, den Schwenklagertopf praktisch nur aus seiner mit entsprechenden randnahen Einrollungen für die Führung der Laufkugeln versehenen zylindrischen Wandung bestehen zu lassen und diese mit ihrem unteren Rand auf dem Lenkrollengabelrücken zu verschweißen, wobei letzterer dann gleichsam selber den Schwenklagertopfboden bildet.

Es empfiehlt sich, den Schwenklagertopf vor Einbringen der Schwenklagerplatte und der Laufkugeln am Lenkrollengabelrücken zu befestigen, also insbesondere zu verschweißen, und dann erst die Schwenklagerplatte mit den Laufkugeln in den Topf einzulegen und letzteren sodann an seinem oberen Wandungsrand über die oberen Lagerkugeln einzurollen, alles so, wie das bereits in der DE-OS 33 41 063 im einzelnen beschrieben ist. Um das abschließende Einrollen des oberen Topfwandungsrandes mit hinreichender Ausrichtung und Sorgfalt vornehmen zu können, ist im Lenkrollengabelrücken zweckmäßig noch eine zentrisch im Bereich der Schwenklagerachse liegende Montage- oder Zentrieröffnung vorhanden, die durch einen aus Kunststoff od.dgl. bestehenden Pfropfen verschlossen werden kann.

In der Zeichnung sind zwei vorteilhafte Ausführungsbeispiele einer erfindungsgemäß beschaffenen Lenkrolle dargestellt. Dabei zeigt

Fig.1 eine erste Ausführungsform der neuen Lenkrolle in geschnittener Seitenansicht,

Fig.2 die Draufsicht auf die Lenkrolle der Fig.1, beides in teilweiser Darstellung, und

Fig.3 eine zweite Ausführungsform der Lenkrolle im Schnitt.

Die abgebildete Lenkrolle besitzt eine das Laufrad 1 und die Radachse 2 tragende Lenkrollengabel 3, die über das über ihr angeordnete Schwenklager 4 um die senkrechte Achse 5 schwenkbeweglich mit dem verfahrbar auszurüstenden Gerät, z.B. einem Müllcontainer, einem Krankenbett od.dgl., verbunden werden kann.

Hierfür besteht das Schwenklager 4 aus einem Schwenklagertopf 6 und einer darin über die Kugellaufkränze 7,8 um die Achse 5 schwenkbeweglich gelagerten Schwenklagerplatte 9. Die Lagerkugeln der Kugellaufkränze 7,8 sind an den entsprechend gerundeten Stellen ober- und unterhalb des Schwenklagerplattenbundes 9' einerseits und außen an den zu Lagerkugelführungen entsprechend eingerollten Rändern 6', 6'' der im übrigen zylindrisch gestalteten Schwenklagertopfwandung 6''' geführt bzw. abgestützt.

Der im vorliegenden Fall mit einem einstückig mit seiner Wandung 6''' beschaffenen Boden $6^{IV}$ versehene Schwenklagertopf 6 ist mit seinem unteren Wandungsrand 6'' über die Rundschweißnaht 10 mit dem Rücken 3' der Lenkrollengabel 3 fest verbunden. Im Lenkrollengabelrücken 3' ist zentrisch zur Schwenklagerachse 5 eine Montage- und Zentrieröffnung 11 vorhanden, die durch einen Kunststoffpfropfen 12 verschlossen werden kann.

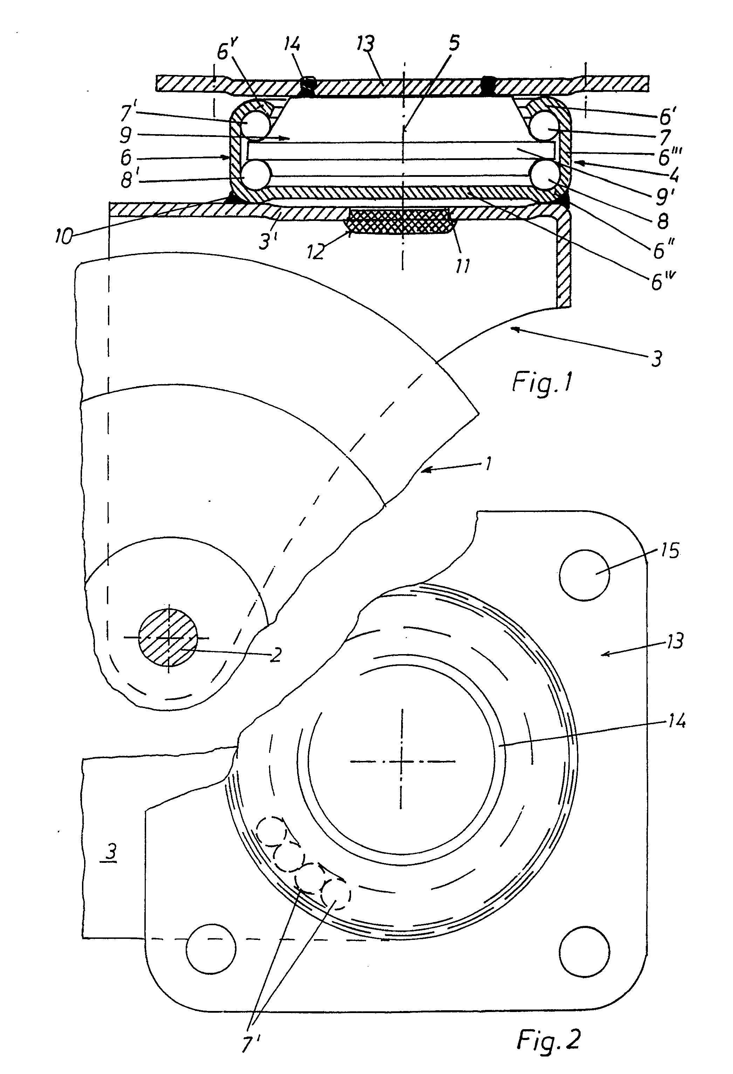

Die Schwenklagerachse 5 ist an ihrem oberen, aus dem Schwenklagertopf 6 herausragenden Ende mit der Befestigungsplatte 13 fest verbunden, und zwar wie im dargestellten Falle vorzugsweise durch eine Rundschweißnaht 14. Die im wesentlichen quadratische Befestigungsplatte 13 ist, wie Fig.2 zeigt, an ihren abgerundeten Ecken mit Schraubbefestigungslöchern 15 versehen, über die sie am nicht dargestellten Gerät bzw. Gerätefuß befestigt werden kann.

Für die vorliegende Erfindung ist wesentlich, daß der Hauptteil der von der Laufrollengabel 3 auf das durch sie abzustützende Gerät übertragenen Last jeweils über den unteren Kugellaufkranz 8, also deren jeweils auf der die Laufradachse 2 liegenden Seite befindliche Laufkugeln 8', auf die Schwenklagerplatte 9 abgetragen wird, mithin die darüber liegenden Laufkugeln 7' und insbesondere auch der darüber gelegene obere Topfwandungsteil $6^V$ unbeansprucht bleiben, mithin der obere Topfwandungsrand 6' insgesamt weniger beansprucht bleibt. Die Traglasten werden somit von der Laufradachse 2 auf kürzest möglichem Weg zu den unteren Laufkugeln 8' und von diesen über den möglichst großen Radius des unteren Kugellaufkranzes auf die Schwenklagerplatte 9 und somit das damit fest verbundene Gerät abgetragen, was für die Beanspruchbarkeit und Lebensdauer der neuen Lenkrolle wesentlich ist.

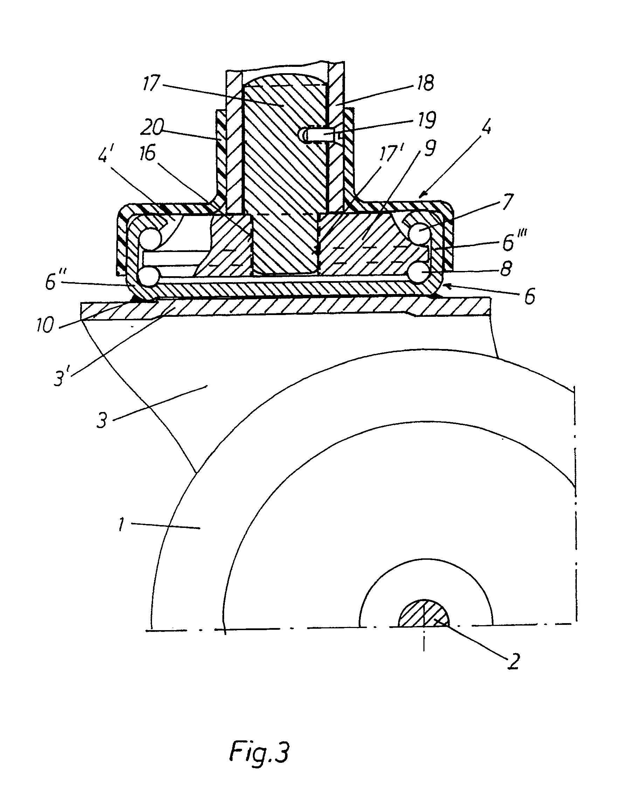

Bei der in Fig.3 dargestellten Lenkrolle ist die Schwenklagerplatte 9 mittig mit einer Innengewindebohrung 16 versehen, die zur unmittelbaren Befestigung der Schwenklagerplatte am Gerät dient. Hierzu kann in die Innengewindebohrung 16 der Schraubgewindezapfen 17 eingeschraubt sein, der in den hohl ausgebildeten Gerätefuß 18 eingesteckt und damit über die Schraube 19 fest verbunden werden kann. Anstelle des einsteckbaren Schraubgewindezapfens 17 kann aber auch unmittelbar der Gerätefuß mit der Schwenklagerplatte 9 verbunden werden, sofern am Gerätefuß unten ein entsprechendes Schraubgewinde 17' vorgesehen ist. In beiden Fällen empfiehlt es sich, den Ringspalt 4' zwischen der Schwenklagertopfwandung 6''' und der Schwenklagerplatte 9 durch eine Schutzkappe 20 abzudecken, die insbesondere auch aus Kunststoff bestehen kann und leicht auf den Gerätefuß 18 aufzuschieben ist sowie nach der Befestigung der Lenkrolle am Gerätefuß über die Topfwandung 6''' geschoben werden kann. Durch diese Abdeckkappe kann das Innere des Schwenklagers gegen Verunreinigung wie aber auch gegen Korrosion geschützt werden.

Es versteht sich, daß im Rahmen der Erfindung mancherlei Abwandlungen möglich sind. Beispielsweise kann die Befestigungsplatte 13 auf der Schwenklagerplatte 9 ggfs. auch lösbar angebracht sein, beispielsweise mittels entsprechend angeordneter Befestigungsschrauben. Weiterhin kann der Schwenklagertopf 6 auch ohne Topfboden $6^{IV}$ verwendet werden, so daß dann der Lenkrollengabelrücken 3' gleichsam auch den Schwenklagertopfboden bildet.

## Patentansprüche

1. Lenkrolle für damit verfahrbar auszurüstende Geräte, wie z.B. Müllcontainer, Krankenbetten od.dgl., mit einer das Laufrad (1) tragenden Lenkrollengabel (3) und einem an deren Rükken (3') angebrachten sowie am Gerät zu befestigenden Schwenklager (4), das aus einem Schwenklagertopf (6) und einer darin über einen oberen und unteren Kugellaufkranz (7,8) schwenkbeweglich gelagerten Schwenklagerplatte (9) besteht, wobei die Kugellaufkränze (7,8) zwischen den Außenumfängen der Schwenklagerplatte (9) einerseits und der im wesentlichen zylindrischen Wandung (6''') des Schwenklagertopfes (6) andererseits liegen und der untere Kugellaufkranz (8) einen mindestens so großen Durchmesser wie der obere Kugellaufkranz (7) besitzt, **dadurch gekennzeichnet,** daß der Schwenklagertopf (6) am Lenkrollengabelrücken (3') angebracht und die oben aus dem Schwenklagertopf (6) herausragende Schwenklagerplatte (9) am Gerät zu befestigen ist.

2. Lenkrolle nach Anspruch 1, **dadurch gekennzeichnet,** daß auf der Schwenklagerplatte (9) eine mit dem Gerät zu verbindende Befestigungsplatte (13) angebracht ist.

3. Lenkrolle nach Anspruch 2, **dadurch gekennzeichnet,** daß die Befestigungsplatte (13) auf der Schwenklagerplatte (9) aufgeschweißt ist.

4. Lenkrolle nach einem der Ansprüche 1 bis 3, **dadurch gekennzeichnet,** daß der Schwenklagertopf (6) mit seinem unteren Wandungsrand (6'') über eine Rundschweißnaht (10) mit dem Rücken (3') der Lenkrollengabel (3) fest verbunden ist.

5. Lenkrolle nach einem der Ansprüche 1 bis 4, **dadurch gekennzeichnet,** daß der Schwenklagertopf (6) einen mit seiner im wesentlichen zylindrischen Wandung (6''') einstückigen Boden (6$^{IV}$) besitzt, der dem Lenkrollengabelrücken (3') zugewandt liegt.

6. Lenkrolle nach einem der Ansprüche 1 bis 5, **dadurch gekennzeichnet,** daß im Lenkrollengabelrücken (3') eine zentrisch zur Schwenklagerachse (5) liegende Montageöffnung (11) vorhanden ist, die durch einen aus Kunststoff od.dgl. bestehenden Pfropfen (12) zu verschließen ist.

7. Lenkrolle nach einem der Ansprüche 1 bis 6, **dadurch gekennzeichnet,** daß die Schwenklagerplatte (9) über mindestens eine Schraubgewindebohrung (16) mit dem Gerät unmittelbar zu verbinden ist.

8. Lenkrolle nach Anspruch 7, **dadurch gekennzeichnet,** daß in der Schwenklagerplatte (9) mittig eine Innengewindebohrung (16) vorhanden ist, in der ein Schraubgewindezapfen (17) einzuschrauben ist, welcher unmittelbar am Gerät angeformt oder in den hohl ausgebildeten Gerätefuß (18) einzustecken und damit zu verbinden ist.

9. Lenkrolle nach einem der Ansprüche 1 bis 8, **dadurch gekennzeichnet,** daß der oben liegende Ringspalt (4') zwischen der Schwenklagertopfwandung (6''') und der Schwenklagerplatte (9) durch eine letztere sowie die Topfwandung (6''') übergreifende Schutzkappe (20) abgedeckt ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A-4 457 63   (LYCKEABORGS) <br> * Spalte 2, Zeile 39 - Spalte 3, Zeile 34; Figuren 1, 2 * <br> – – – | 1,2,4,5,6, 8 | B 60 B 33/00 <br> F 16 C 35/06 <br> F 16 C 19/18 |
| Y | US-A-1 882 497   (JARVIS) <br> * Seite 1, Zeile 66 - Seite 2, Zeile 12; Figur 1 * <br> – – – | 1,2,4,5,6, 8 | |
| A | DE-U-8 804 581   (HACO-ROLLEN) <br> * Seite 4, Zeilen 4 - 18; Figur 1 * <br> – – – | 1 | |
| A | FR-A-2 164 575   (WANZL & SOHN) <br> * Seite 4, Zeile 24 - Seite 5, Zeile 6; Figuren 2, 3 * <br> – – – – – | 9 | |

|  | RECHERCHIERTE SACHGEBIETE (Int. Cl.5) |
|---|---|
|  | B 60 B <br> F 16 C |

Der vorliegende Recherchenbericht wurde für alle Patentansprüche erstellt

| Recherchenort | Abschlußdatum der Recherche | Prüfer |
|---|---|---|
| Den Haag | 07 Mai 91 | AYITER I. |